# EUROPEAN PATENT SPECIFICATION

(11) **EP 2 214 932 B1**
(45) Date of publication and mention of the grant of the patent: **24.08.2011**
(21) Application number: 08854642.9
(22) Date of filing: 27.11.2008
(51) Int. Cl.: B60R 13/04, B60J 1/00, B60J 1/18, B60J 5/10, B60J 10/02, B60J 10/08

(54) **GLAZING**
VERGLASUNG
VITRAGE

(30) Priority: 27.11.2007 EP 07425747
(43) Date of publication of application: 11.08.2010
(73) Proprietor: Pilkington Italia S.p.A., 66050 San Salvo (CH) (IT)
(72) Inventor: MELES, Provino, I-66050 San Salvo (Chieti) (IT)
(74) Representative: Pettet, Nicholas Edward
(86) International application number: PCT/EP2008/066361
(87) International publication number: WO 2009/068624

(56) References cited:
- EP-A- 0 493 069
- DE-A1- 2 555 195

## Description

The present invention relates to a glazing having a trim mounted thereon, and a method of mounting the trim onto the glazing.

The aesthetic appearance of an automotive vehicle, such as a car, is a key factor in successful sales. A number of features contribute to the overall appearance of a vehicle, one of which is the trim associated with the doors and windows. Trims, such as chrome-finish or plastic strips, are often added to fixed windows by being mounted on the glazing itself, rather than on the body of the vehicle. Trims for openable glazings are provided on the vehicle door or body. The trims themselves do not provide a structural or mechanical function, unlike a metal or polymer frame surrounding a glazing, but give a desirable aesthetic finish.

There are several different ways in which such finishers can be mounted on or bonded to the surface of the glass. For example, when the glazing is encapsulated by a polymer frame around its periphery, the trim may be included in the mould used for the encapsulation, and therefore bonded to the glazing by the polymer frame. The trim may be bonded to the glazing by a layer or multiple points of adhesive along its length. Alternatively, the trim may be clipped to the edge of the glazing, either directly, or via a holder that is bonded to the glazing.

DE 25 55 195 A1 discloses an opening tailgate for a vehicle, which is provided with a window pane to which a stepped frame is attached by an adhesive, the stepped frame having a trim strip attached thereto. The trim strip is shaped to engage with the edge of the frame.

The above methods are appropriate when the glazing will be fixed within a vehicle, such as a backlight fixed within a tailgate. However, for glazings that are openable and frameless (having neither a polymer nor a metal frame), such fixing methods may be unsuitable. An example of a frameless glazing is an opening side window, particularly those provided on convertible or coupé cars, where the glazing contacts the "B" pillar of the car directly, and does not sit within an enclosed frame forming part of the car door. One particular glazing where it is desirable to be able to mount a trim is on an opening backlight. Rather than being bonded to the frame of a tailgate, an opening backlight forms the entire opening portion of the rear of a vehicle. The glazing therefore fits snugly against the frame of the vehicle when closed, and is not provided with any form of polymer frame around its periphery. This therefore removes the option of being able to bond any trim to the glazing using this polymer frame.

Any trim must therefore be adhered or clipped to the glazing. Adhering the trim to the glazing requires the trim to be positioned exactly to ensure that the glazing closes correctly and fits snugly within the car body. However, a tolerance is required to take into account variations in the edge of the glazing to which the trim is applied. These variations may be from cutting, grinding or shaping. Therefore it is difficult to fit the trim exactly to the edge of the glazing. A further problem is regulating the amount of adhesive applied. If the same amount of adhesive is applied to the trim for each glazing, any variations in the shape of the edge of the glazing will either cause adhesive to escape from under the trim onto the glazing, or for there to be too little adhesive. Clipping the trim to the body is also difficult, as the trim itself, or holder to which the trim is clipped, needs to be able to withstand the tolerances in the shape of the edge of the glazing.

Therefore, if various trims and finishers are to be used successfully with openable glazings such as opening backlights, a method of mounting the trim onto the glazing, which is compatible with the tolerances required, needs to be found.

The present invention aims to address this problem by providing a method of bonding a trim onto the edge of a frameless automotive glazing using an adhesive, comprising: placing the glazing in a first position in which an edge of the glazing is free to receive a trim; locating a trim having adhesive applied to at least a portion thereof in contact with the glazing; pushing the glazing into a second position, causing the glazing to deform against the trim and the adhesive such that the trim bonds to the glazing. By using a two-stage process in positioning the glazing and trim, and then applying the trim to the edge of a frameless automotive glazing, any gap between the edge of the trim and the glazing can be minimised.

The adhesive may be pre-applied to the trim. Preferably, the method further comprises locating the trim in the region of the glazing, and applying the adhesive to the trim before locating the trim in contact with the glazing.

Preferably, the glazing is held in the first position by a applying a first set of vacuum suction cups. Preferably, the glazing is pushed into the second position by applying a second set of vacuum cups.

Preferably, the adhesive is a hot melt adhesive.

Preferably, the trim is held in position in contact with the glazing by vacuum suction.

Preferably, the glazing is a single-ply of glass.

The invention also provides an apparatus for applying a trim to the edge a frameless automotive glazing by causing the glazing to deform against the trim and an adhesive such that the trim bonds to the glazing, the apparatus comprising means for supporting and centring a frameless automotive glazing; at least one suction cup forming a first set for applying vacuum suction to the underside of the glazing to hold the glazing in a first position; at least one suction cup forming a second set for applying vacuum suction to the underside of the glazing to push the glazing into a second position; a recess for receiving a trim, the recess being provided with a plurality of vacuum suction holes for maintaining the position of the trim in contact with the glazing; and means for locating the trim onto the edge of the glazing. ,

By using two separate sets of suction cups to maintain the position of the glazing and to push it into a second position, in which it will be in contact with a trim, the gap between the edge of the trim and the glazing when fitted is minimised.

The invention also provides a glazing having a trim applied thereon using the above method, and a glazing having a trim as described above applied thereon using such a method.

The present invention will now be described by way of example only, and with reference to the accompanying drawings, in which:
Figure 1 is a schematic plan view of a frameless glazing having a trim attached along one side;
Figure 2 is a schematic cross-section along the line A-A' in Figure 1;
Figure 3 is a schematic perspective view of the trim in more detail;
Figure 4 is a schematic plan view of apparatus for applying a trim to a glazing, in accordance with the present invention;
Figure 5 is a schematic cross-section showing the positioning of the suction cups on the glazing; and
Figure 6 is an enlarged view of the area highlighted in Figure 5.

In the present invention, it has been appreciated that the manner in which the trim or finisher is aligned with the edge of a frameless glazing is key to ensuring that the strict tolerances between the trim/finisher and the edge of the glazing are met. By bending the edge of the glazing to which the trim/finisher is applied whilst maintaining the spatial position of the glazing, even small tolerances may be achieved.

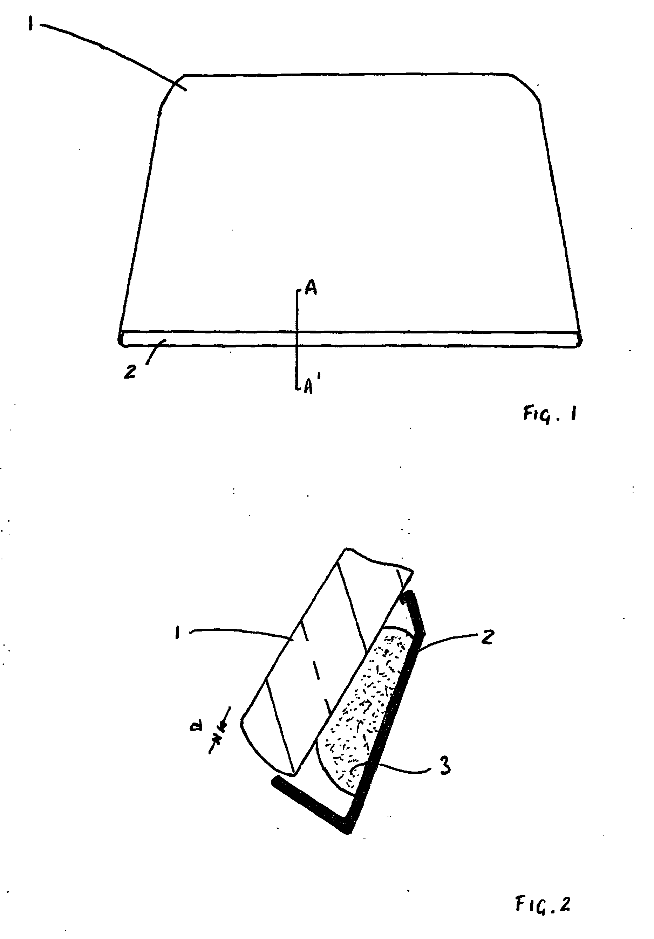

Figure 1 is a schematic plan view showing a frameless glazing, in this case an opening backlight, formed from a single ply of toughened glass, having a trim attached along one side. The backlight 1 is generally rectangular in shape, having rounded corners and opposing long and short sides. One of the long sides is slightly longer than the other, giving a slight trapezoidal shape to the glazing. The trim 2 is attached to the longest edge of the glazing, which will form the bottom edge of the glazing when fitted into a vehicle.

Figure 2 a schematic cross-section along the line A-A' in Figure 1, and shows the positioning of the trim 2 on the edge of the frameless glazing 1. The trim 2 is generally in the shape of a "C", with the upper part of the "C" touching the surface of the glass, and the lower part positioned at a distance d from the surface of the frameless glazing 1 adjacent the edge. The trim 2 is bonded to the lower surface of the glazing by an adhesive 3. By allowing the lower edge of the trim to be spaced apart from the edge of the glazing, any variations in the edge shape due to machining can be tolerated. However, in order to ensure that a seal is created between the glazing and the car body by the adhesive 3, as well as ensuring that there is no visible gap between the trim 2 and the frameless glazing 1, this distance d must be as small as possible. Typically, the amount of tolerance required is less than 1mm.

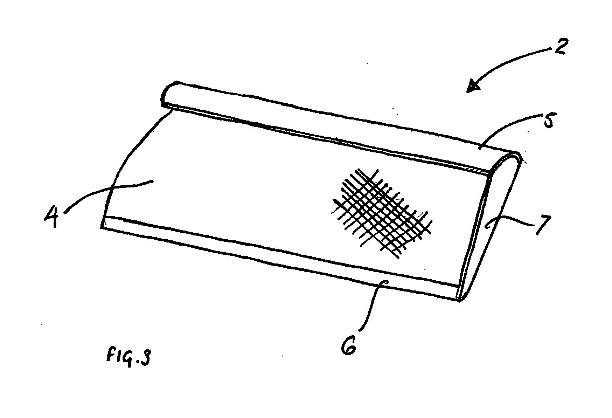

The trim 2 is shown in more detail in Figure 3. Figure 3 is a part schematic perspective view of the trim 2, showing the four-part construction. The main body 4 of the trim 2 is formed from a thermoplastic material, such as polyurethane, and has a rough surface (indicated in part by hatched lines) to aid in the adhesion of the hot melt to the surface of the trim 2. The main body 4 is positioned within a chrome outer shell 5, which provides the aesthetic appearance of the trim 2. This chrome outer shell 5 wraps round the upper region of the trim 2. The lower region of the trim 2 is provided with a lip 6, formed from PVC (poly vinyl chloride). The end region of the trim 2 is provided with a cap 7, again formed from PVC. Both the lip 6 and cap 7 provide a cover for any hot melt material that escapes around the edges of the trim 2 when mounted on the frameless glazing 1. The lip 6 aids in reducing the final gap between the trim 2 and the glazing 1 seen by a viewer.

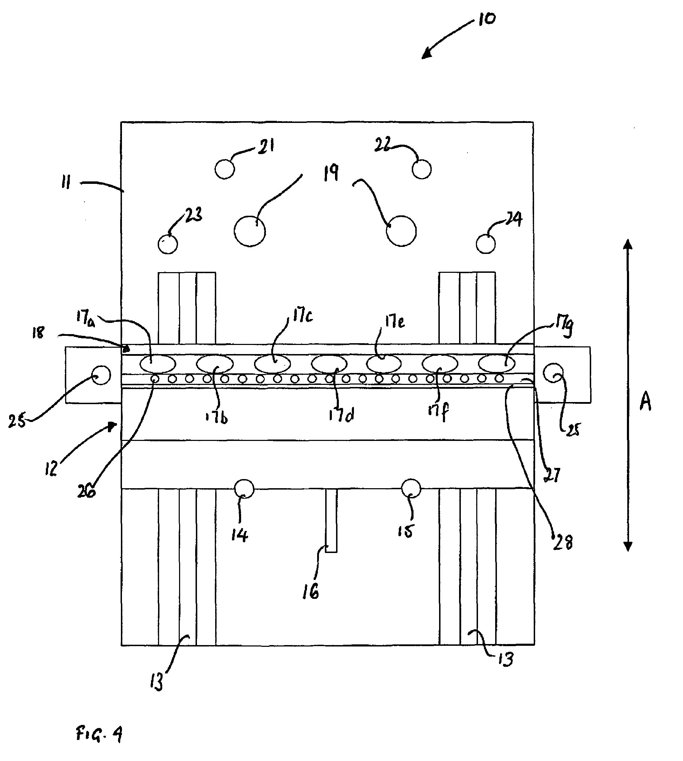

Figure 4 is a schematic plan view of apparatus for applying a trim to a glazing, in accordance with the present invention. The apparatus 10 is comprises a support table 11 and manufacturing cell 12. The manufacturing cell 12 has means for locating the trim 2 onto the edge of the glazing 1 comprising runners 13 lying across the support table 11, over which the cell is slideable by means of handles 14, 15. A positioning bar 16 is provided to allow an operator to position the cell 12 for mounting of the trim 2 onto the frameless glazing 1. The cell 12 itself may be moved in the directions indicated by arrow A.

The manufacturing cell 12 itself comprises two sets of suction cups: a first set of suction cups 17a to g, arranged adjacent a former 18, which is shaped to match the curvature of the frameless glazing 1, and acts to support the frameless glazing 1 during fixing of the trim 2; and a second set of suction cups 19, positioned on supports 20 (not shown), a distance away from the former 18. When the frameless glazing 1 is placed into the manufacturing cell 12, as described below, the first set of suction cups 17a - g contact the surface of the frameless glazing 1 in the region of the edge of the frameless glazing 1, and the second set 19 contact the frameless glazing 1 away from the edge, in a central region of the frameless glazing 1. Means for supporting the glazing 1 comprising supports 21, 22, are provided to help support the weight of the glazing, which is centred using centring means comprising two posts 23, 24 and locked into position by two grips 25. Vacuum suction is provided along the length of the former 18 via an array of vacuum suction holes 26, which act to maintain the position of the trim 2 during the application process.

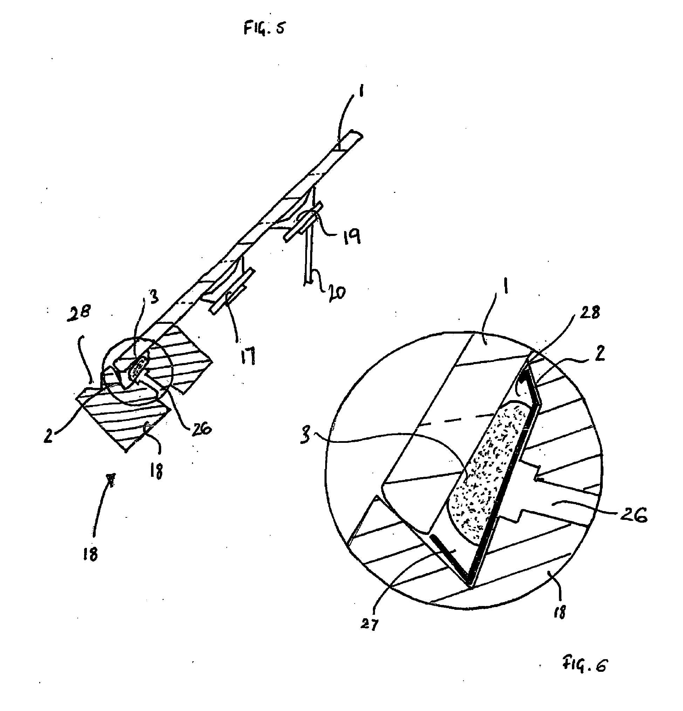

Figure 5 is a schematic cross-section showing the positioning of the suction cups 17a-g, 19, on the frameless glazing 1. This Figure illustrates the position in which the suction cups 17a-g, 19 are in contact with the frameless glazing 1, and the trim 2 is in its final position, bonded to the surface of the frameless glazing 1. Although in this Figure the frameless glazing 1 is shown as being flat, in reality it is likely to have at least a minimum curvature in at least one direction. The array of vacuum suction holes 26 in the former 18 are positioned within a recess 27, into which the trim 2 is placed. A groove 28 is provided in the upper surface of the former 18, which receives a wheel for guiding an adhesive dispensing gun (not shown) during fixing of the trim 2.

Figure 6 shows an enlarged view of the region highlighted in Figure 4. The trim 2 rests in the recess 27, with sufficient adhesive 3 to bond the trim 2 to the frameless glazing 1 without any overflow. The distance between the lower part of the trim 2 and the surface of the frameless glazing 1 adjacent the edge is minimised.

The method by which the trim 2 is mounted onto the frameless glazing 1 will now be described.

Firstly, the frameless glazing 1 onto which the trim 2 will be mounted positioned on the supports 20 - 22. The frameless glazing 1 is centered using the posts 23, 24, and then secured in position using the grips 25. The second set of vacuum cups 19 are then placed onto the underside surface of the frameless glazing 1, and vacuum applied. Once the frameless glazing 1 is held in place by these suction cups 19, the grips 25 are released. At this point, the frameless glazing 1 is in a first, nominal, position placing the frameless glazing 1 in which one edge of the frameless glazing 1 is free to receive the trim 2.

The trim 2 is then prepared. The bond face of the trim 2 (the face to be contacted with the surface of the frameless glazing 1) is prepared by wiping with SIKA Activator, and left to dry. SIKA 209N primer is then applied to the bond face, and left to cure for 30 minutes. The region of the glazing where the trim 2 will be bonded is also prepared by wiping with SIKA Activator (wipe-on, wipe-off).

A prepared trim 2 is then placed in the recess 27 of the former 18, and vacuum applied via vacuum suction holes 26. An adhesive dosing gun is then run along the groove 28 to apply a bead of SIKAMELT 9645/15 black hot melt adhesive, (having a maximum time before bonding of 40 seconds, at a temperature in the range 120°C to 170°C). The adhesive was applied at 150°C and 2 Bar, taking 25 seconds. (SIKA-branded products are available from Sika AG, Zugerstrasse 50, CH-6341 Baar, Switzerland). As alternatives to applying a single bead of adhesive along the length of the trim 2, a plurality of small beads may be applied, or adhesive may only be applied to selected portions of the trim 2.

Once the adhesive has been applied, the former 18 is moved along the runners 13 until the trim 2 is in contact with the frameless glazing 1. A gap of approximately 1mm is left between the bottom edge of the trim 2 and the frameless glazing 1. The first set of suction cups 17a - g are then positioned against the underside surface of the frameless glazing 1, and a vacuum applied, pushing the frameless glazing into a second position and causing the glazing to deform against the trim 2, minimising the gap between the bottom edge of the trim 2 and the frameless glazing 1. The frameless glazing 1 is then held in this position for up to 120 seconds to allow sufficient curing of the hot melt adhesive such that the trim 2 remains in place once the vacuum cups 17a - g have been removed. The frameless glazing 1 having the trim 2 attached can then be removed from the apparatus 10, and the hot melt will be fully cured within 4 hours.

When this method was carried out on a frameless glazing 1 (a backlight), the final gap d between the bottom edge of the trim 2 and the frameless glazing 1 was approximately 0.4mm at the ends of the trim 2, and between 0 and 0.1 mm along the remainder of the trim 2.

Although in the above method, a hot melt material is used as the adhesive, other suitable adhesives may be used instead. These may include humidity curing polymers, and pre-applied adhesives, where the adhesive is applied to the trim 2 in the form of a number of tablets or a continuous strip, and protected by a removable cover sheet.

## Claims

1. A method of bonding a trim (2) not providing a structural or mechanical function onto the edge of a frameless automotive glazing (1) using an adhesive (3), comprising:
placing the glazing in a first position in which an edge of the glazing is free to receive the trim;
locating the trim having adhesive applied to at least a portion thereof in contact with the glazing;
pushing the glazing into a second position, causing the glazing to deform against the trim and the adhesive such that the trim bonds to the glazing.

2. The method of claim 1, wherein the adhesive (3) is pre-applied to the trim (2).

3. The method of claim 1, further comprising locating the trim (2) in the region of the glazing (1), and applying the adhesive (3) to the trim before locating the trim in contact with the glazing.

4. The method of claim 1, 2 or 3, wherein the glazing (1) is held in the first position by a applying a first set of vacuum suction cups (17).

5. The method of any of claims 1 to 4, wherein the glazing (1) is pushed into the second position by applying a second set of vacuum cups (19).

6. The method of any of claims 3 to 5, wherein the adhesive (3) is a hot melt adhesive.

7. The method of any of claims 1 to 6, wherein the trim (2) is held in position in contact with the glazing (1) by vacuum suction.

8. The method of any preceding claim, wherein the glazing (1) is a single-ply of glass.

9. The method of any preceding claim, wherein the glazing (1) is placed in the first position on an apparatus (10) for applying a trim (2) to the edge of a frameless automotive glazing.

10. The method of claim 9, wherein the apparatus (10) comprises supports (21, 22), and the glazing (1) is placed on the supports.

11. The method of claim 9 or claim 10, wherein the apparatus (10) comprises a former (18) which is shaped to match the curvature of the glazing (1), and supports the glazing during fixing of the trim (2).

12. The method of any of claims 9 to 11, wherein the former (18) includes a recess (27), and the trim is placed in the recess.

13. A frameless automotive glazing (1) having a trim (2) applied thereon using the method of any of claims 1 to 12.

14. An apparatus (10) for applying a trim (2) not providing a structural or mechanical function to the edge of a frameless automotive glazing (1) by causing the glazing to deform against the trim and an adhesive such that the trim bonds to the glazing, comprising:
means (21, 22, 23, 24) for supporting and centring a frameless automotive glazing;
at least one suction cup (17) forming a first set for applying vacuum suction to the underside of the glazing to hold the glazing in a first position;
at least one suction cup (19) forming a second set for applying vacuum suction to the underside of the glazing to push the glazing into a second position;
a recess (27) for receiving a trim, the recess being provided with a plurality of vacuum suction holes (26) for maintaining the position of the trim in contact with the glazing; and
means for locating the trim onto the edge of the glazing.

## Patentansprüche

1. Verfahren zum Befestigen einer Zierleiste (2) ohne tragende oder mechanische Funktion an der Kante einer rahmenlosen Automobilverglasung (1) unter Verwendung eines Klebstoffes (3) mit den folgenden Schritten:
die Verglasung wird in einer ersten Stellung angeordnet, bei der eine Kante der Verglasung zum Erhalt der Zierleiste bereit ist,
die Zierleiste wird in Kontakt mit der Verglasung gebracht, wobei zumindest an einem Teil der Zierleiste ein Klebstoff aufgebracht ist,
die Verglasung wird in eine zweite Stellung geschoben, wodurch sich die Verglasung an die Zierleiste und den Klebstoff anformt, sodass die Zierleiste eine Bindung mit der Verglasung eingeht.

2. Verfahren nach Anspruch 1, wobei der Klebstoff (2) vorab auf die Zierleiste (2) aufgebracht wird.

3. Verfahren nach Anspruch 1, das ferner ein Anordnen der Zierleiste (2) im Bereich der Verglasung (1) und ein Auftragen des Klebstoffes (3) auf die Zierleiste umfasst, bevor die Zierleiste mit der Verglasung in Kontakt gebracht wird.

4. Verfahren nach Anspruch 1, 2 oder 3, wobei die Verglasung (1) mit Hilfe eines ersten Satzes von Vakuumsaugnäpfen (17) in einer ersten Stellung gehalten wird.

5. Verfahren nach einem der Ansprüche 1 bis 4, wobei die Verglasung (1) mit Hilfe eines zweiten Satzes von Vakuumsaugnäpfen (19) in eine zweite Stellung gebracht wird.

6. Verfahren nach einem der Ansprüche 3 bis 5, wobei der Klebstoff (3) ein Schmelzklebstoff ist.

7. Verfahren nach einem der Ansprüche 1 bis 6, wobei die Zierleiste mit Hilfe von Vakuumansaugung in Kontaktstellung mit der Verglasung (1) gehalten wird.

8. Verfahren nach einem der vorhergehenden Ansprüche, wobei es sich bei der Verglasung (1) um ein einlagiges Glas handelt.

9. Verfahren nach einem der vorhergehenden Ansprüche, wobei die Verglasung (1) an einer Vorrichtung für das Anbringen einer Zierleiste (2) an einer Kante einer rahmenlosen Verglasung in eine erste Position gebracht wird.

10. Verfahren nach Anspruch 9, wobei die Vorrichtung (10) Träger (21, 22) aufweist und die Verglasung auf die Träger aufgebracht wird.

11. Verfahren nach Anspruch 9 oder 10, wobei die Vorrichtung (10) ein Formstück (18) aufweist, das an die Krümmung der Verglasung (1) angepasst geformt ist und die Verglasung während der Befestigung der Zierleiste (2) stützt.

12. Verfahren nach einem der Ansprüche 9 bis 11, wobei das Formstück (18) eine Ausnehmung (27) aufweist und die Zierleiste in die Ausnehmung eingebracht wird.

13. Rahmenlose Automobilverglasung (1) mit einer Zierleiste (2), die unter Anwendung des Verfahrens nach einem der Ansprüche 1 bis 12 daran angebracht wurde.

14. Vorrichtung (10) zum Anbringen einer Zierleiste (2) ohne tragende oder mechanische Funktion an die Kante einer rahmenlosen Automobilverglasung (1), indem die Verglasung an die Zierleiste und den Klebstoff so angeformt wird, dass die Zierleiste eine Bindung mit der Verglasung eingeht, wobei die Vorrichtung aufweist:
Mittel (21, 22, 23, 24) zum Halten und Zentrieren einer rahmenlosen Automobilverglasung,
einen ersten Satz von Vakuumsaugnäpfen mit wenigstens einem Saugnapf (17), um eine Vakuumansaugung an der Unterseite der Verglasung zum Halten der Verglasung in einer ersten Stellung einzusetzen,
einen zweiten Satz von Vakuumsaugnäpfen mit wenigstens einem Saugnapf (19), um eine Vakuumansaugung an der Unterseite der Verglasung zum Schieben der Verglasung in eine zweite Stellung einzusetzen,
eine Ausnehmung (27) zum Aufnehmen einer Zierleiste, wobei die Ausnehmung mehrere Vakuumsauglöcher (26) aufweist, um die Zierleiste in einer Kontaktstellung mit der Verglasung zu halten, und
Mittel zum Anordnen der Zierleiste an der Kante der Verglasung.

## Revendications

1. Procédé pour lier une garniture (2) ne possédant pas de fonction structurelle ou mécanique au bord d'un vitrage automobile sans châssis (1) à l'aide d'un adhésif (3), consistant à :
placer le vitrage à une première position à laquelle un bord du vitrage est libre de recevoir la garniture ;
positionner la garniture à laquelle est appliqué l'adhésif sur au moins une partie de celle-ci en contact avec le vitrage ;
pousser le vitrage à une seconde position, cela provoquant la déformation du vitrage contre la garniture et l'adhésif de manière à ce que la garniture se lie au vitrage.

2. Procédé selon la revendication 1, dans lequel l'adhésif (3) est pré-appliqué à la garniture (2).

3. Procédé selon la revendication 1, consistant en outre à positionner la garniture (2) dans la région du vitrage (1) et à appliquer l'adhésif (3) à la garniture avant de positionner la garniture en contact avec le vitrage.

4. Procédé selon la revendication 1, 2 ou 3, dans lequel le vitrage (1) est maintenu à la première position en appliquant un premier ensemble de ventouses (17).

5. Procédé selon l'une quelconque des revendications 1 à 4, dans lequel le vitrage (1) est poussé à la seconde position en appliquant un second ensemble de ventouses (19).

6. Procédé selon l'une quelconque des revendications 3 à 5, dans lequel l'adhésif (3) est un adhésif fondant à chaud.

7. Procédé selon l'une quelconque des revendications 1 à 6, dans lequel la garniture (2) est maintenue en position en contact avec le vitrage (1) par aspiration sous vide.

8. Procédé selon l'une quelconque des revendications précédentes, dans lequel le vitrage (1) est constitué d'une seule couche de verre.

9. Procédé selon l'une quelconque des revendications précédentes, dans lequel le vitrage (1) est placé à la première position sur un appareil (10) destiné à appliquer une garniture (2) au bord d'un vitrage d'automobile sans châssis.

10. Procédé selon la revendication 9, dans lequel l'appareil (10) comprend des supports (21, 22) et le vitrage (1) est placé sur les supports.

11. Procédé selon la revendication 9 ou la revendication 10, dans lequel l'appareil (10) comprend un dispositif de façonnage (18) dont la forme s'adapte à la courbure du vitrage (1) et qui supporte le vitrage pendant la fixation de la garniture (2).

12. Procédé selon l'une quelconque des revendications 9 à 11, dans lequel le dispositif de façonnage (18) comprend un évidement (27), et dans lequel la garniture est déplacée dans l'évidement.

13. Vitrage d'automobile sans châssis (1) auquel est appliquée une garniture (2) par le procédé de l'une quelconque des revendications 1 à 12.

14. Appareil (10) destiné à appliquer une garniture (2) ne possédant pas de fonction structurelle ou mécanique au bord d'un vitrage automobile sans châssis (1), en amenant le vitrage à se déformer contre la garniture et un adhésif tel que la garniture se lie au vitrage, comprenant :
un moyen (21, 22, 23, 24) destiné à supporter et à centrer un vitrage d'automobile sans châssis ;
au moins une ventouse (17) formant un premier ensemble destiné à appliquer une aspiration à la face inférieure du vitrage pour maintenir le vitrage à une première position ;
au moins une ventouse (19) formant un second ensemble destiné à appliquer une aspiration à la face inférieure du vitrage pour pousser le vitrage vers une seconde position ;
un évidement (27) destiné à recevoir une garniture, l'évidement étant muni d'une pluralité de trous d'aspiration (26) destinés à maintenir la position de la garniture en contact avec le vitrage ; et
un moyen destiné à positionner la garniture sur le bord du vitrage.
